# EUROPEAN PATENT APPLICATION

(11) **EP 2 835 728 A1**
(43) Date of publication of application: **11.02.2015**
(21) Application number: 13771993.6
(22) Date of filing: 01.04.2013
(51) Int. Cl.: G06F 3/048, G06F 3/041, G06F 3/0488

(54) **MOBILE ELECTRONIC DEVICE**

(30) Priority: 05.04.2012 JP 2012086676
(71) Applicant: Sharp Kabushiki Kaisha, Osaka-shi, Osaka 545-8522 (JP)
(72) Inventor: KAWAMOTO, Kohsei, Osaka-shi, Osaka 545-8522 (JP)
(74) Representative: Müller - Hoffmann & Partner
(86) International application number: PCT/JP2013/059862
(87) International publication number: WO 2013/150998

(57) **Abstract**

A display portion (10) provided in a portable electronic device (1) including a touch panel (21) has, as display modes, a full-screen display mode in which an image is displayed over an entire surface of the display surface (13), a right-hand display mode in which a scaled-down display of an original image with a similarity shape is provided along a right side (13C) and a lower side (13B) of the display surface (13), and a left-hand display mode in which a scaled-down display of an original image with a similarity shape is provided along a left side (13D) and a lower side (13B) of the display surface. When a prescribed input operation is received by an input portion (20), a control portion (2) switches a display mode of the display portion (10) from the full-screen display mode to the right-hand display mode or the left-hand display mode.

## Description

### TECHNICAL FIELD

This invention relates to a portable electronic device with a touch panel, and is utilized as a smart phone, a tablet terminal, or the like, for example.

### BACKGROUND ART

When a portable electronic device with a touch panel is operated by one hand, it may be held by the right hand and operated by the right thumb, or may be held by the left hand and operated by the left thumb. In this case, it is desirable that the portable terminal be operated comfortably when it is held by either hand.

For example, the portable terminal described in Japanese Patent Laying-Open No. 2009-169820 (PTD 1) determines whether it is being operated by the right hand, or the left hand, or both hands, based on a detection result from a right touch sensor portion provided on an upper part of a right edge of a case or from a left touch sensor portion provided on an upper part of a left edge of the case, and based on a detection result of a touch position on a touch panel. When the portable terminal is being operated by one hand, the arrangement of operation buttons (icons) on the touch panel portion is changed so as to facilitate the one-handed operation.

The portable terminal described in Japanese Patent Laying-Open No. 2009-163278 (PTD 2) also includes a sensor for detecting a portion held by a user. In this portable terminal, a plurality of icons are arranged within a region surrounded by an arc of a circle whose center is at a first corner at a lower end of a first side close to the portion held by the user, and by chords extending from this arc toward the first corner.

The portable terminal described in Japanese Patent Laying-Open No. 2010-146032 (PTD 3) specifies the position of the root of a finger operating the portable terminal, based on the shape of a depressed region on a touch panel. Then, based on the position of this root, the display position of the object to be displayed is changed.

As a document relevant to the above, Japanese Patent Laying-Open No. 2009-163356 (PTD 4) is known which deals with a portable terminal including a deformable case and a touch panel. The portable terminal described in this document includes on a rear surface thereof a keyboard capable of being slidingly housed. By changing the arrangement of operation buttons (icons) displayed on the touch panel in accordance with the position of the keyboard, one-handed operation of both the operation buttons on the touch panel and the operation buttons of the keyboard becomes possible.

### CITATION LIST

### PATENT DOCUMENT

PTD 1: Japanese Patent Laying-Open No. 2009-169820
PTD 2: Japanese Patent Laying-Open No. 2009-163278
PTD 3: Japanese Patent Laying-Open No. 2010-146032
PTD 4: Japanese Patent Laying-Open No. 2009-163356

### SUMMARY OF INVENTION

### TECHNICAL PROBLEM

In recent years, the display panel of a portable terminal such as a smart phone or the like has increased in size. A portable terminal having a screen size of up to about 4 inches can be easily held and operated by one hand. However, in the case of a portable terminal having a screen size of about 4 to 5 inches, although the portable terminal can be held by one hand, it is difficult to touch the entire region of the touch panel with the thumb of the hand holding it.

Thus, as in each of the foregoing documents, the arrangement of buttons (icons) displayed on the touch panel is often changed. It is, however, difficult to change the arrangement of buttons so as to be applicable to all application software.

This invention was made in view of the foregoing problem, and an object of the invention is to facilitate one-handed operation of a portable electronic device including a touch panel having an increased screen size.

### SOLUTION TO PROBLEM

A portable electronic device according to one embodiment of this invention includes a case, a display portion provided on the case portion and having a rectangular display surface, an input portion that accepts input from a user, and a control portion. The input portion includes a touch panel integral with the display portion, for detecting a touch position on the display surface. The display portion has, as display modes, a full-screen display mode in which an image is displayed over an entire surface of the display surface, a right-hand display mode in which a scaled-down display of an original image with a similarity shape is provided along a right side and a lower side of the display surface, and a left-hand display mode in which a scaled-down display of an original image with a similarity shape is provided along a left side and the lower side of the display surface. When a prescribed operation is received by the input portion, the control portion switches a display mode of the display portion from the full-screen display mode to the right-hand display mode or the left-hand display mode.

Preferably, the portable electronic device further includes an acceleration sensor for detecting an attitude of the portable electronic device based on a direction of gravity. The control portion switches the display mode of the display portion to either one of the right-hand display mode and the left-hand display mode, in accordance with the attitude of the portable electronic device when the prescribed input operation is being received.

Preferably, when the prescribed input operation is being received, and when the attitude of the portable electronic device is inclined such that a lower end of the right side of the display surface is lower than a lower end of the left side of the display surface, the control portion switches the display mode of the display portion from the full-screen display mode to the right-hand display mode. Preferably, when the prescribed input operation is being received, and when the attitude of the portable electronic device is inclined such that a lower end of the left side of the display surface is lower than the lower end of the right side of the display surface, the control portion switches the display mode of the display portion from the full-screen display mode to the left-hand display mode.

Preferably, the portable electronic device is a portable communication terminal with a telephone function, and further includes a vibrator for alerting the user to an incoming call through vibrations instead of a sound when the portable electronic device is in a manner mode. In this case, the display portion switches the display mode of the display portion from the full-screen display mode to the right-hand display mode or the left-hand display mode, when a condition that the portable electronic device is in the manner mode is also satisfied in addition to a condition that the prescribed input operation is being received by the input portion.

Preferably, the input portion further includes a plurality of hardware keys provided on the case portion. The prescribed input operation is an operation to press a prescribed key of the plurality of hardware keys.

Preferably, the control portion switches the display mode of the display portion to the left-hand display mode when the control portion detects in the right-hand display mode that the touch position on the touch panel has continuously changed in a direction toward the left side of the display surface from a left edge portion of a region where a scaled-down image is displayed. The control portion switches the display mode of the display portion to the right-hand display mode when the control portion detects in the left-hand display mode that the touch position on the touch panel has continuously changed in a direction toward the right side of the display surface from a right edge portion of a region where a scaled-down image is displayed.

Preferably, when in the right-hand display mode or the left-hand display mode, the display portion displays, in a peripheral region of the display surface other than the region where the scaled-down image is displayed, an image of a portion to be displayed in the peripheral region when in the full-screen display mode, with a change in at least one of hue, chroma, and brightness.

### ADVANTAGEOUS EFFECTS OF INVENTION

According to the foregoing embodiments, one-handed operation can be easily performed even with an increased screen size.

### BRIEF DESCRIPTION OF DRAWINGS

Fig. 1 is a perspective view showing an example of the external appearance of a portable electronic device 1 according to a first embodiment.
Fig. 2 is a block diagram showing an example of the hardware configuration of portable electronic device 1 shown in Fig. 1.
Fig. 3 is a diagram for explaining a right-hand display mode.
Fig. 4 is a diagram for explaining a left-hand display mode.
Fig. 5 is a diagram for explaining switching from the right-hand display mode to the left-hand display mode.
Fig. 6 is a flowchart showing a procedure of switching the display mode by the portable electronic device according to the first embodiment.
Fig. 7 is a diagram showing a modification of a screen display in the right-hand display mode.
Fig. 8 is a diagram for explaining switching to the right-hand display mode by a portable electronic device according to a second embodiment.
Fig. 9 is a diagram for explaining switching to the left-hand display mode by the portable electronic device according to the second embodiment.
Fig. 10 is a flowchart showing a procedure of switching the display mode by the portable electronic device according to the second embodiment.
Fig. 11 is a flowchart showing a procedure of switching the display mode by a portable electronic device according to a third embodiment.

### DESCRIPTION OF EMBODIMENTS

Referring to the drawings, embodiments of this invention will be hereinafter described in detail. Identical or corresponding parts are indicated with identical reference numerals, and the description thereof will not be repeated.

### (First Embodiment)

### [Structure of Portable Electronic Device 1]

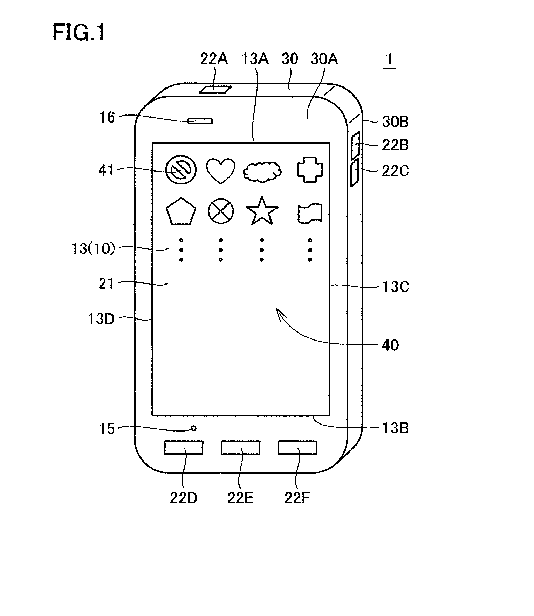

Fig. 1 is a perspective view showing an example of the external appearance of portable electronic device 1 according to the first embodiment. In the first embodiment, a portable terminal with a communication function, which is referred to as a so-called "smart phone", will be described by way of example as portable electronic device 1. Portable electronic device 1 according to the first embodiment, however, is not limited to a portable terminal, and also includes a PDA (Personal Digital Assistant) without a communication function, and the like.

Referring to Fig. 1, portable electronic device 1 includes a substantially plate-shaped case 30, a display portion 10 having a rectangular display surface 13 on a front surface 30A of case 30, a touch panel 21 formed integrally with display portion 10, and hardware keys (hardware operation buttons) 22A to 22F (which may be collectively denoted as hardware keys 22) provided on case 30.

Display portion 10 is constituted of a liquid crystal panel, an EL (ElectroLuminescence) display, or the like. In the example shown in Fig. 1, a plurality of operation buttons (icons) 41 are displayed on a background image, as an image 40 displayed on display surface 13.

In the first embodiment, display surface 13 has a screen size (the length of a diagonal line) of about 4 to 5 inches. Although portable electronic device 1 having display portion 10 of this size can be held by one hand (the right hand or the left hand), it is difficult to touch the entire region of display surface 13 with the thumb of the hand holding portable electronic device 1.

Touch panel 21 is overlaid on display surface 13 of display portion 10 to be formed integrally. Touch panel 21 outputs coordinates of a touch position (position pressed on the touch panel).

Hardware keys 22, which are hardware operation buttons, accept a user input operation. In the case of Fig. 1, a power key 22A for turning power ON and OFF is provided on a top surface of case 30, and volume keys 22B and 22C (volume-up key 22B and volume-down key 22C) are provided on a right side surface of case 30. A menu key 22D, a home key 22E, and a back key 22F are also provided on a lower portion of front surface 30A of case 30. Pressing menu key 22D displays a menu of the screen being operated. Pressing home key 22E displays a home screen. Pressing back key 22F returns to a previous screen.

These hardware keys 22 can be assigned other functions by application software. Moreover, pressing a hardware key 22 for a prescribed time or longer may execute other functions. For example, pressing home key 22E for a long time may display a list of applications being executed, or pressing volume-down key 22C for a long time may turn portable electronic device 1 into a manner mode. In the manner mode, the user is notified of an incoming call through vibrations of a vibrator instead of a sound.

Note that in place of hardware keys 22, soft keys having the same functions can be arranged within display portion 10.

Portable electronic device 1 shown in Fig. 1 further includes a microphone 15 and a speaker 16 provided on the front surface of case 30.

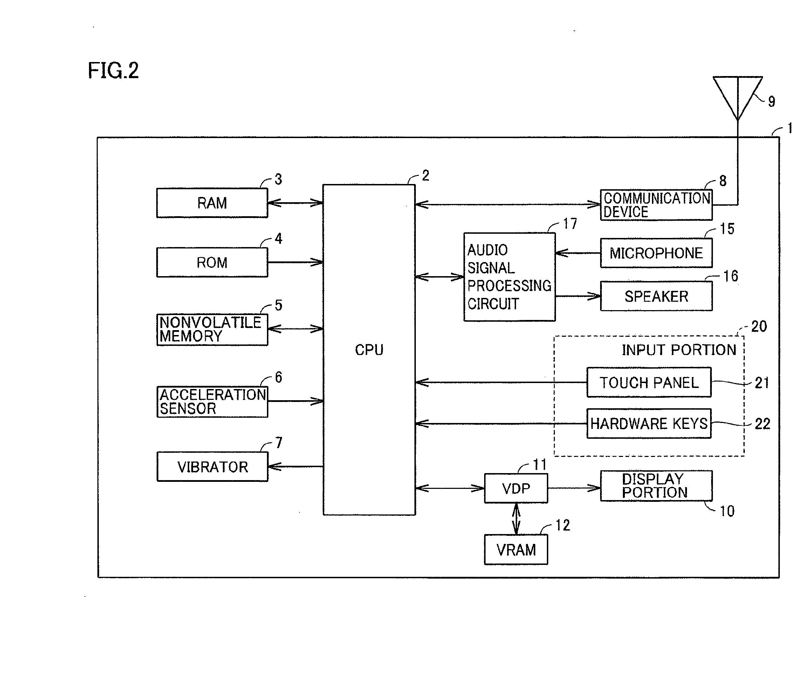

Fig. 2 is a block diagram showing an example of the hardware configuration of portable electronic device 1 shown in Fig. 1. Referring to Fig. 2, portable electronic device 1 includes a CPU (Central Processing Unit) 2, a RAM (Random Access Memory) 3, a ROM (Read Only Memory) 4, a nonvolatile memory 5, an acceleration sensor 6, a vibrator 7, a communication device 8, an antenna 9, display portion 10, a VDP (Video Display Processor) 11, a VRAM (Video Random Access Memory) 12, microphone 15, speaker 16, an audio signal processing circuit 17, and display portion 10.

CPU 2 functions as a control portion that controls the overall operation of portable electronic device 1 by executing programs stored in ROM 4 and nonvolatile memory 5. RAM 3 is used as main memory of CPU 2.

Nonvolatile memory 5 is constituted of an EEPROM (Electrically Erasable Programmable Read-Only Memory) such as a flash memory, for example. The nonvolatile memory may be replaced with a hard disk. Nonvolatile memory 5 stores a program running on CPU 2 (application software or the like), or stores data output from CPU 2.

Acceleration sensor 6 is a sensor that detects acceleration. For example, acceleration sensor 6 has a weight element supported by a beam structure.
Acceleration sensor 6 detects and outputs an amount of displacement of the weight element as a change in capacitance or piezoresistance. The amount of displacement of the weight element is proportional to the acceleration acting on acceleration sensor 6. Generally, a portable telephone such as a smart phone or the like is equipped with a three-axis acceleration sensor for detecting an attitude of the portable telephone based on a direction of gravity.

Vibrator 7 vibrates based on a command from CPU 2, and is used, for example, to notify the user of an incoming call when in the manner mode.

Communication device 8 performs wireless communication of an audio signal and a data signal via antenna 9, based on a command from CPU 2.

VDP 11 is a processor that performs image output processing for display portion 10 based on a command from CPU 2. VRAM 12 is a memory that stores an image displayed on display portion 10 based on a command from VDP 11. In the case of Fig. 2, VRAM 12 is directly connected to VDP 11.

Audio signal processing circuit 17 performs AD (Analog-to-Digital) conversion of an audio signal detected at microphone 15, and performs signal processing, such as encoding and noise removal, on a converted digital audio signal. Audio signal processing circuit 17 further performs prescribed signal processing on the digital signal for outputting a sound, and outputs the resulting digital signal to speaker 16. Note that unlike the case of Fig. 2, audio signal processing circuit 17 may not be provided, and CPU 2 may execute the function of audio signal processing circuit 17 based on a program.

Input portion 20 accepts an input operation by the user, and includes touch panel 21 and hardware keys 22 explained with Fig. 1.

Touch panel 21 outputs coordinates of a touch position on the panel. For example, as shown in Fig. 1, when a plurality of icons 41 are displayed on display surface 13 of display portion 10, CPU 2 can detect which of icons 41 is being touched by the user, by accessing VRAM 12 based on the coordinates of the touch position output from touch panel 21.

### [Switching of Display Mode]

Switching of a display mode, which is a feature of portable electronic device 1 according to the first embodiment, will be described next.

Display portion 10 has, as display modes, a full-screen display mode, a right-hand display mode, and a left-hand display mode. In the full-screen display mode, an image 40 is displayed over the entire surface of display surface 13, as shown in Fig. 1.

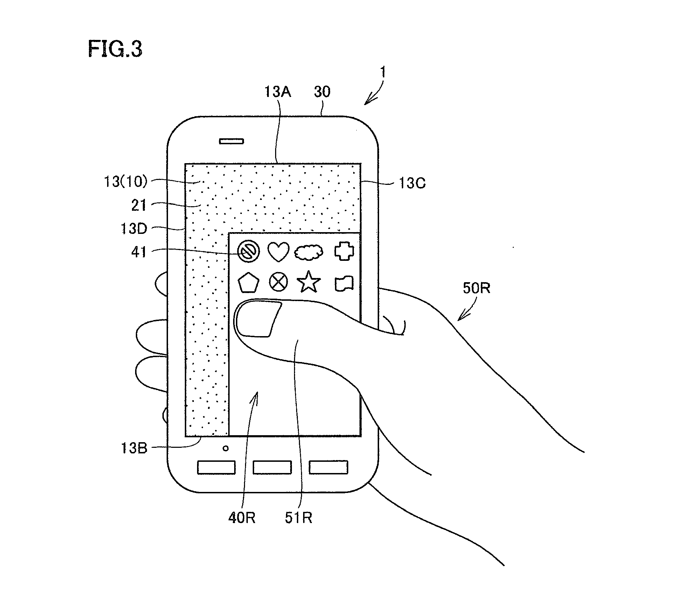

Fig. 3 is a diagram for explaining the right-hand display mode. Referring to Fig. 3, in the right-hand display mode, an image 40R formed by scaling down original image 40 in a similarity shape is displayed along a lower side 13B and a right side 13C of display surface 13. In the case of Fig. 3, a single color such as black, blue, or the like is displayed in a peripheral region (the dotted region in Fig. 3) where scaled-down image 40R is not displayed on display surface 13.

A size of the region where scaled-down image 40R is displayed in Fig. 3 is set such that when portable electronic device 1 is held by right hand 50R, the entire region where scaled-down image 40R is displayed can be touched with right thumb 51 R. A size of scaled-down image 40R (the length of a diagonal line) is set to about 3 to 4 inches, for example. Consequently, portable electronic device 1 can be easily operated by the right thumb while being held by the right hand.

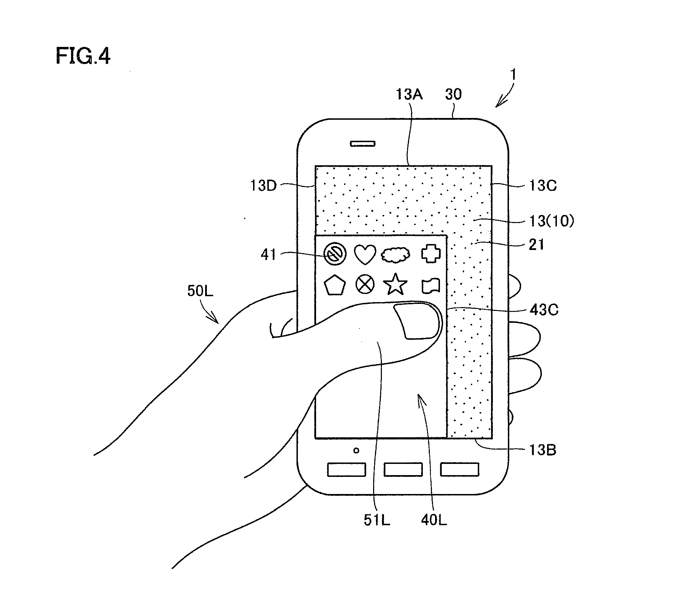

Fig. 4 is a diagram for explaining the left-hand display mode. Referring to Fig. 4, in the left-hand display mode, an image 40L formed by scaling down original image 40 in a similarity shape is displayed along lower side 13B and a left side 13D of display surface 13. In the case of Fig. 4, a single color such as black, blue, or the like is displayed in a peripheral region (the dotted region in Fig. 4) where scaled-down image 40L is not displayed on display surface 13.

A size of the region where scaled-down image 40L is displayed in Fig. 4 is set such that when portable electronic device 1 is held by left hand 50L, the entire region where scaled-down image 40L is displayed can be touched with left thumb 51L. A size of scaled-down image 40L (the length of a diagonal line) is set to about 3 to 4 inches, for example. Consequently, portable electronic device 1 can be easily operated with the left thumb while being held by the left hand.

In the first embodiment, switching from the full-screen display mode to the right-hand display mode or the left-hand display mode (collectively referred to as the one-hand display mode) is performed by the user pressing a prescribed hardware key. Switching of the display mode is allocated to an input operation that has not yet been assigned another function, such as pressing back key 22F for a long time, or pressing volume-up key 22B for a long time, for example. When a prescribed input operation (pressing of the prescribed hardware key) is performed again in the one-hand display mode, the display mode is switched back to the full-screen display mode.

Alternatively, switching from the full-screen display mode to the one-hand display mode may be realized by inputting a specific gesture using the acceleration sensor, instead of pressing a hardware key.

To which of the right-hand display mode and the left-hand display mode the display mode is to be switched in response to the prescribed input operation can be selected in advance. For example, a right-handed user selects the right-hand display mode in advance, and a left-handed user selects the left-hand display mode in advance.

Switching from the full-screen display mode to the one-hand display mode can also be realized by a touch input operation on a prescribed position on touch panel 21. However, depending on the application software, such a touch input operation sometimes may already be assigned a prescribed function, and thus, it is difficult to use the same input operation for all application software. By assigning switching of the display mode to a hardware key, a unified interface can be provided independently of the application software.

Displaying scaled-down image 40R or 40L of original image 40 in the one-hand display mode as described above can be realized relatively easily on a mobile OS referred to as Android (registered trademark). In Android (registered trademark), the size of a button or text on the screen is designated in the unit referred to as dip (device-independent pixel), which is independent of the resolution of the terminal. This allows the size of a button or text on the screen to become invariable depending on the resolution (dpi: dots per inch) of the terminal. Through this system, a scaled-down display can be easily realized by artificially changing the resolution (dpi) of the terminal.

Note that the input operations using touch panel 21 are common in the full-screen display mode and the one-hand display mode. For example, in the one-hand display mode shown in Figs. 3 and 4, when the user touches operation button (icon) 41 on the screen, touch panel 21 outputs coordinates of the touch position. CPU 2 can detect an operation button corresponding to the coordinates of the touch position with reference to VRAM 12 shown in Fig. 2.

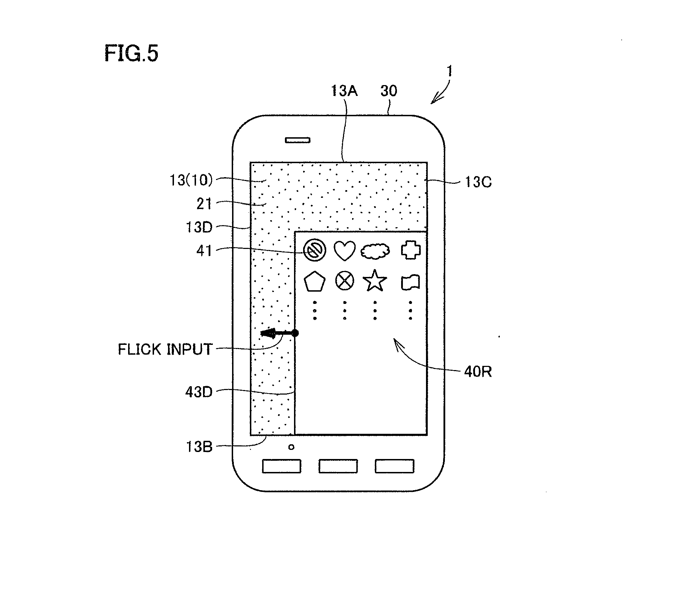

Fig. 5 is a diagram for explaining switching from the right-hand display mode to the left-hand display mode. Switching between the right-hand display mode and the left-hand display mode can be easily realized by utilizing an input operation on touch panel 21.

Fig. 5 shows the right-hand display mode. Here, the display mode is switched to the left-hand display mode when CPU 2 detects that the touch position on touch panel 21 has continuously changed in the direction toward left side 13D of display surface 13 from a left edge portion 43D of the region where scaled-down image 40R is displayed (this is referred to as a so-called "flick input").

For example, when the user has shifted portable electronic device 1 from his/her right hand to his/her left hand, he/she can perform the above-described touch input operation with his/her left thumb, thereby easily realizing switching from the right-hand display mode to the left-hand display mode.

Referring to Fig. 4, the display mode is switched from the left-hand display mode to the right-hand display mode when CPU 2 detects that the touch position on touch panel 21 has continuously changed in the direction toward right side 13C of display surface 13 from a right edge portion 43C of the region where scaled-down image 40L is displayed.

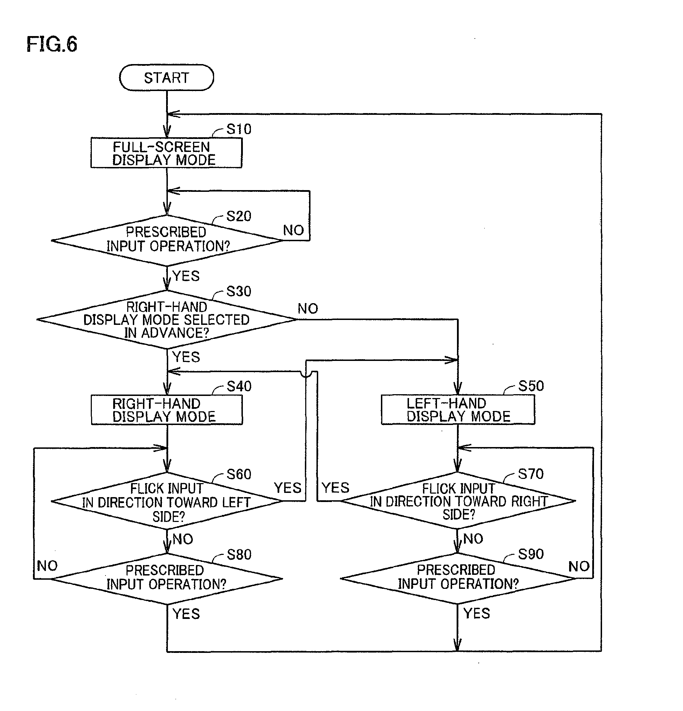

Fig. 6 is a flowchart showing a procedure of switching the display mode by the portable electronic device according to the first embodiment. Referring to Figs. 2 and 6, the foregoing description of the procedure of switching the display mode will be summarized below.

In an initial state (at power-up or at re-activation from a sleep mode), the display mode of display portion 10 is in the full-screen display mode (step S10). In the full-screen display mode, if CPU 2 detects the prescribed input operation through input portion 20 (YES in step S20), CPU 2 switches the display mode of display portion 10 to the one-hand display mode. In this case, if the right-hand display mode has been selected in advance as the one-hand display mode (YES in step S30), CPU 2 switches the display mode to the right-hand display mode (step S40). If the left-hand display mode has been selected in advance as the one-hand display mode (NO in step S30), CPU 2 switches the display mode to the left-hand display mode (step S50).

When in the right-hand display mode, if CPU 2 detects a flick input in the direction toward left side 13D of display surface 13 from left edge portion 43D of the region where scaled-down image 40R (see Fig. 5) is displayed (YES in step S60), CPU 2 switches the display mode to the left-hand display mode (step S50).

When in the left-hand display mode, if CPU 2 detects a flick input in the direction toward right side 13C of display surface 13 from right edge portion 43C of the region where scaled-down image 40L (see Fig. 4) is displayed (YES in step S70), CPU 2 switches the display mode to the right-hand display mode (step S40).

When in the one-hand display mode, if CPU 2 detects the prescribed input operation (YES in step S80 or S90), CPU 2 switches the display mode of display portion 10 to the full-screen display mode (step S10). Each of the foregoing steps is repeated thereafter.

As described above, since portable electronic device 1 according to the first embodiment has the one-hand display mode in which a scaled-down display of an original image with a similarity shape is provided, portable electronic device 1 can be easily operated by one hand even if it has an increased screen size.

### [Modification]

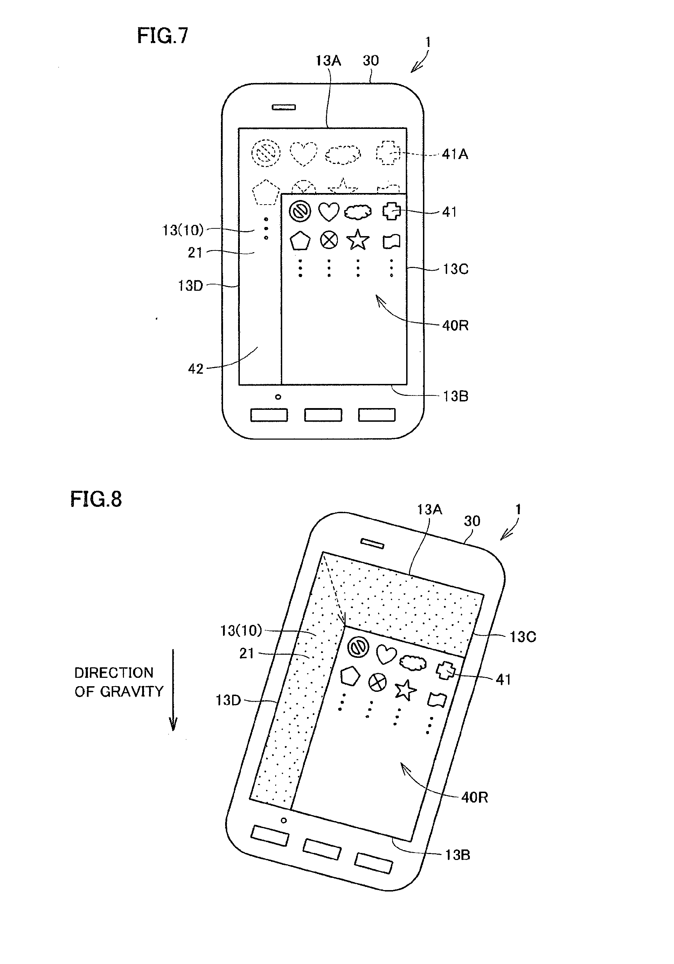

Fig. 7 is a diagram showing a modification of a screen display in the right-hand display mode. In the modification shown in Fig. 7, when in the right-hand display mode, display portion 10 displays, in a peripheral region 42 of display surface 13 other than the region where scaled-down image 40R is displayed, an image of a portion to be displayed in peripheral region 42 when in the full-screen display mode, with a change in at least one of hue, chroma, and brightness. For example, the original image is converted into a gray scale (monochrome image) or converted into a monochrome color scale for display.

Similarly, when in the left-hand display mode, display portion 10 displays, in a peripheral region of display surface 13 other than the region where scaled-down image 40L is displayed, an image of a portion to be displayed in this peripheral region when in the full-screen display mode, with a change in at least one of hue, chroma, and brightness.

The display provided as above has the advantage of making it clear to the user that the scaled-down display is being provided in the one-hand display mode, and is not an error in the screen display.

### (Second Embodiment)

In the first embodiment, when the display mode is switched from the full-screen display mode to the one-hand display mode, to which of the right-hand display mode and the left-hand display mode the display mode is to be switched has been selected in advance. A portable electronic device according to the second embodiment utilizes a direction of gravity detected by acceleration sensor 6 shown in Fig. 2, so that the display mode is switched to either one of the right-hand display mode and the left-hand display mode in accordance with an attitude of the portable electronic device.

Since the hardware configuration of the portable electronic device according to the second embodiment is the same as that according to the first embodiment described with Figs. 1 and 2, the description thereof will not be repeated.

Fig. 8 is a diagram for explaining switching to the right-hand display mode by the portable electronic device according to the second embodiment. In the example of Fig. 8, when the prescribed input operation for switching the display mode (for example, pressing volume-up key 22B shown in Fig. 1 for a long time) is being received, if the attitude of the portable electronic device is inclined such that a lower end of right side 13C of display surface 13 is lower than a lower end of left side 13D of display surface 13, the display mode of display portion 10 is switched from the full-screen display mode to the right-hand display mode.

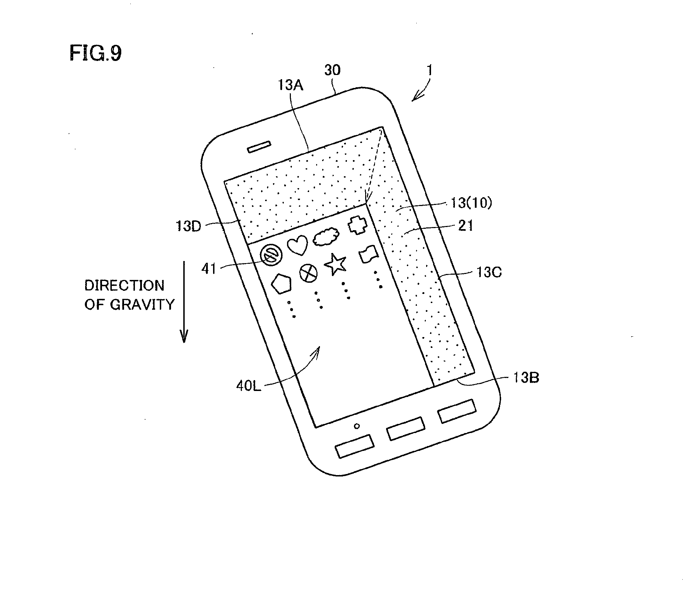

Fig. 9 is a diagram for explaining switching to the left-hand display mode by the portable electronic device according to the second embodiment. In the example of Fig. 9, when the prescribed input operation for switching the display mode is being received, if the attitude of the portable electronic device is inclined such that the lower end of left side 13D of display surface 13 is lower than the lower end of right side 13C, the display mode of display portion 10 is switched from the full-screen display mode to the right-hand display mode.

The attitude of the portable electronic device can be easily detected using a three-axis acceleration sensor. Assume, for example, that in the portable electronic device shown in Fig. 1, components of gravitational acceleration are detectable in an up/down direction (direction along right side 13C of display surface 13), a right/left direction (direction along an upper side 13A of display surface 13), and a forward/backward direction (direction perpendicular to display surface 13). In this case, it is seen that the lower end of right side 13C of display surface 13 is lower than the lower end of left side 13D when the component of gravitational acceleration in the up/down direction is in a direction from the top toward the bottom, and the component of gravitational acceleration in the right/left direction is in a direction from the left toward the right.

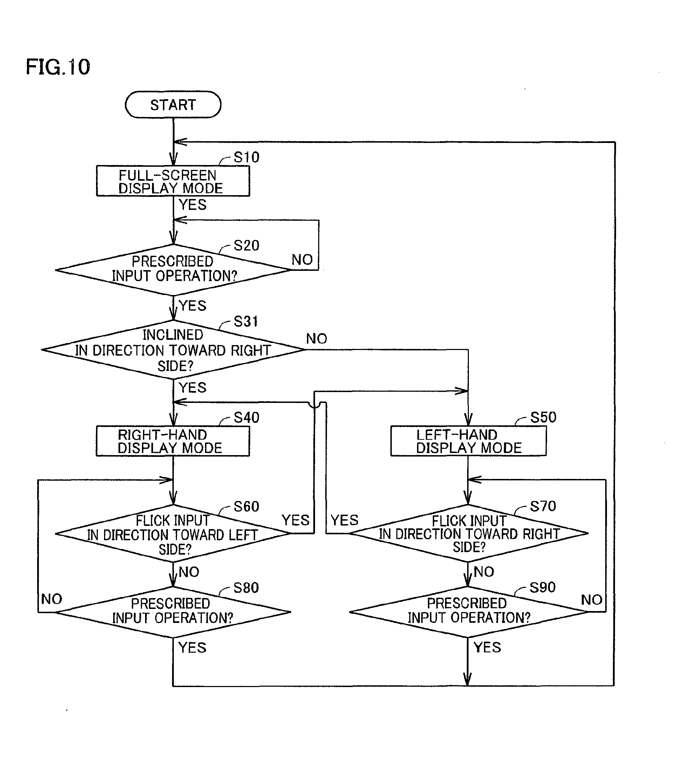

Fig. 10 is a flowchart showing a procedure of switching the display mode by the portable electronic device according to the second embodiment.

The flowchart of Fig. 10 differs from the flowchart of Fig. 6 in that step S31 is provided in place of step S30 shown in Fig. 6. Specifically, if the prescribed input operation is being received (YES in step S20), when the attitude of the portable electronic device is inclined in a direction toward the right side of display surface 13, that is, when the lower end of right side 13C is lower than the lower end of left side 13D (YES in step S31), CPU 2 shown in Fig. 2 switches the display mode to the right-hand display mode (step S40). Conversely, if the prescribed input operation is being received (YES in step S20), when the attitude of the portable electronic device is inclined in a direction toward the left side of display surface 13, that is, when the lower end of left side 13D is lower than the lower end of right side 13C (NO in step S31), CPU 2 shown in Fig. 2 switches the display mode to the left-hand display mode (step S50).

Since the flowchart of Fig. 10 is otherwise the same as the flowchart of Fig. 6, identical or corresponding steps are indicated with identical reference numerals, and the description thereof will not be repeated.

In Figs. 8 to 10, the display mode is switched to either one of the right-hand display mode and the left-hand display mode, in accordance with in which of the right and left directions the attitude of the portable electronic device is inclined. The condition for switching the display mode, however, is not necessarily limited to this condition. For example, the display mode may be switched to either one of the right-hand display mode and the left-hand display mode in accordance with in which of the forward and backward directions the attitude of the portable electronic device is inclined.

### (Third Embodiment)

In the first and second embodiments, when the prescribed input operation (for example, pressing volume-up key 22B shown in Fig. 1 for a long time) is being received, the display mode of display portion 10 is switched from the full-screen display mode to the one-hand display mode (the right-hand display mode or the left-hand display mode). In the third embodiment, the display mode of display portion 10 is switched from the full-screen display mode to the one-hand display mode when a condition that the portable electronic device is in a manner mode is also satisfied in addition to a condition that the prescribed input operation is being received by the input portion.

When the user is on board a train, he/she often needs to operate the portable electronic device such as a smart phone by one hand. In this case, because the smart phone is usually in the manner mode, the condition that the portable electronic device is in the manner mode is added as a condition for switching the display mode. The display mode is not switched to the one-hand display mode by the user simply performing the prescribed input operation.

Note that the portable electronic device according to the third embodiment is limited to a portable electronic device with a telephone function, such as a smart phone or the like.

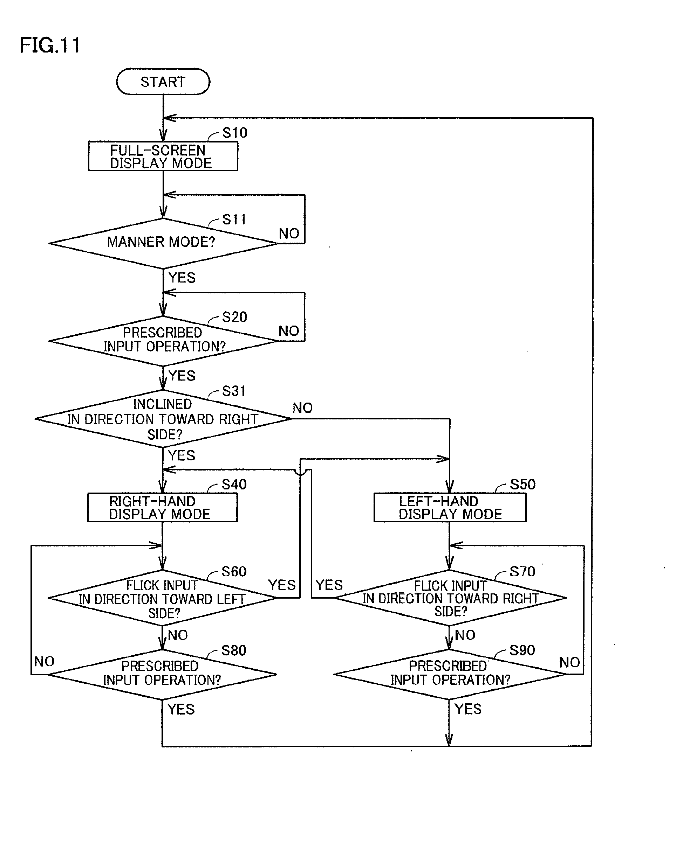

Fig. 11 is a flowchart showing a procedure of switching the display mode by the portable electronic device according to the third embodiment.

The flowchart of Fig. 11 differs from the flowchart of Fig. 10 by further including step S11 of determining whether the portable electronic device is in the manner mode or not. Specifically, when the portable electronic device is in the manner mode (YES in step S11), and when the prescribed input operation is being received (YES in step S20), CPU 2 shown in Fig. 2 switches the display mode of display portion 10 to the one-hand display mode (step S40 or S41). Since the flowchart of Fig. 11 is otherwise the same as the flowchart of Fig. 10, identical or corresponding steps are indicated with identical reference numerals, and the description thereof will not be repeated.

It should be understood that the embodiments disclosed herein are illustrative and non-restrictive in every respect. It is intended that the scope of the present invention is defined by the terms of the claims rather than by the foregoing description, and includes all modifications within the scope and meaning equivalent to the claims.

### REFERENCE SIGNS LIST

1: portable electronic device, 2: CPU, 6: acceleration sensor, 10: display portion, 11: VDP, 12: VRAM, 13: display surface, 13A: upper side, 13B: lower side, 13C: right side, 13D: left side, 20: input portion, 21: touch panel, 22: hardware key, 30: case, 30A: front surface, 40: image (full-screen display mode), 40R: scaled-down image (right-hand display mode), 40L: scaled-down image (left-hand display mode), 42: peripheral region, 43C: right edge portion, 43D: left edge portion.

## Claims

1. A portable electronic device comprising:
a case portion;
a display portion provided on said case portion, said display portion having a rectangular display surface;
an input portion that accepts input from a user; and
a control portion,
said input portion including a touch panel for detecting a touch position on said display surface, said touch panel being integral with said display portion,
said display portion having, as display modes, a full-screen display mode in which an image is displayed over an entire surface of said display surface, a right-hand display mode in which a scaled-down display of an original image with a similarity shape is provided along a right side and a lower side of said display surface, and a left-hand display mode in which a scaled-down display of an original image with a similarity shape is provided along a left side and the lower side of said display surface, and
when a prescribed operation is received by said input portion, said control portion switching a display mode of said display portion from said full-screen display mode to said right-hand display mode or said left-hand display mode.

2. The portable electronic device according to claim 1, further comprising:
an acceleration sensor for detecting an attitude of said portable electronic device based on a direction of gravity, wherein
said control portion switches the display mode of said display portion to either one of said right-hand display mode and said left-hand display mode, in accordance with the attitude of said portable electronic device when said prescribed input operation is being received.

3. The portable electronic device according to claim 2, wherein
when said prescribed input operation is being received, and when the attitude of said portable electronic device is inclined such that a lower end of the right side of said display surface is lower than a lower end of the left side of said display surface, said control portion switches the display mode of said display portion from said full-screen display mode to said right-hand display mode, and
when said prescribed input operation is being received, and when the attitude of said portable electronic device is inclined such that the lower end of the left side of said display surface is lower than the lower end of the right side of said display surface, said control portion switches the display mode of said display portion from said full-screen display mode to said left-hand display mode.

4. The portable electronic device according to any of claims 1 to 3, wherein
said portable electronic device is a portable communication terminal with a telephone function, and further comprises a vibrator for alerting the user to an incoming call through vibrations instead of a sound when said portable electronic device is in a manner mode, and
said display portion switches the display mode of said display portion from said full-screen display mode to said right-hand display mode or said left-hand display mode, when a condition that said portable electronic device is in said manner mode is also satisfied in addition to a condition that said prescribed input operation is being received by said input portion.

5. The portable electronic device according to any of claims 1 to 4, wherein
said input portion further includes a plurality of hardware keys provided on said case portion, and
said prescribed input operation is an operation to press a prescribed key of the plurality of hardware keys.

6. The portable electronic device according to any of claims 1 to 5, wherein
said control portion switches the display mode of said display portion to said left-hand display mode when said control portion detects in said right-hand display mode that the touch position on said touch panel has continuously changed in a direction toward the left side of said display surface from a left edge portion of a region where a scaled-down image is displayed, and
said control portion switches the display mode of said display portion to said right-hand display mode when said control portion detects in said left-hand display mode that the touch position on said touch panel has continuously changed in a direction toward the right side of said display surface from a right edge portion of a region where a scaled-down image is displayed.

7. The portable electronic device according to any of claims 1 to 6, wherein
when in said right-hand display mode or said left-hand display mode, said display portion displays, in a peripheral region of said display surface other than the region where the scaled-down image is displayed, an image of a portion to be displayed in said peripheral region when in said full-screen display mode, with a change in at least one of hue, chroma, and brightness.
